# EUROPÄISCHE PATENTSCHRIFT

(11) **EP 2 152 946 B1**
(45) Veröffentlichungstag und Bekanntmachung des Hinweises auf die Patenterteilung: **18.07.2012**
(21) Anmeldenummer: 08758495.9
(22) Anmeldetag: 13.05.2008
(51) Int. Cl.: D03D 3/02, D03D 11/02, D03D 15/04

(54) **VERFAHREN ZUM HERSTELLEN EINES GEWEBES UND HIERBEI HERGESTELLTES GEWEBE**
METHOD FOR PRODUCING A WOVEN FABRIC AND WOVEN FABRIC PRODUCED THEREBY
PROCÉDÉ DE FABRICATION D'UN TISSU ET TISSU AINSI FABRIQUÉ

(30) Priorität: 16.05.2007 DE 102007023062
(43) Veröffentlichungstag der Anmeldung: 17.02.2010
(73) Patentinhaber: Iprotex GmbH & Co. KG, 95234 Sparneck (DE)
(72) Erfinder: PIWONSKI, Timo, 96364 Marktrodach (DE); WYRWIS, Bernd, 96349 Steinwiesen (DE)
(74) Vertreter: Fischer & Konnerth
(86) Internationale Anmeldenummer: PCT/EP2008/003836
(87) Internationale Veröffentlichungsnummer: WO 2008/138589

(56) Entgegenhaltungen:
- EP-A- 0 278 707
- WO-A-97/48940
- DE-A1- 10 353 777

## Beschreibung

Die vorliegende Erfindung betrifft ein Verfahren zum Herstellen eines Gewebes, wobei das Gewebe wenigstens einen monofilen oder monofilartigen Schussfaden aus hochschrumpfbarem Material und Kettfäden aus schrumpfarmem Material aufweist, sowie ein insbesondere nach diesem Verfahren hergestellten Gewebe.

Aus der DE 103 53 777 A1 ist ein radial schrumpfbarer zweilagig gewebter Gewebeschlauch mit einer oberen und einer unteren Gewebelage bekannt, bei dem die Gewebelagen an ihren Kanten mit Bindungskettfäden miteinander verbunden sind, wobei der Gewebeschlauch Schussfäden aus hochschrumpfbarem Material und Kettfäden aus schrumpfarmem Material aufweist. In einer besonderen Ausführung ist der Gewebeschlauch aus multifilen Kettfäden und einem monofilen Schussfaden gefertigt.

Aus der DE 102 12 918 A1 ist ein schrumpfbares textiles Gewebe oder Gewebeband zum Umhüllen von länglichen Gegenständen bekannt, welches ein Grundgewebeband und einseitig daran angebrachte schrumpffähige Endlos-Fäden aufweist, das dadurch gekennzeichnet ist, dass die hochschrumpffähigen Endlos-Fäden quer zur Bandbreite verlaufen und nur einen Teil der Fäden des schrumpfarmen Grundgewebes umschlingen. Das Band ist vorzugsweise gewebt ist und weist Oberschussfäden aus hochschrumpfendem Material auf, die über die Bandbreite nur mit einem Teil der Kettfäden verwebt sind. Dieses Band wickelt sich bei thermischer Belastung aufgrund der Schrumpfung der schrumpffähigen Endlos-Fäden zu einer Hülse eine und ist hervorragend geeignet zur Ummantelung und zum Schutz von insbesondere länglichen Gegenständen.

Die genannten Gewebeschläuche oder -bänder werden beispielsweise zum mechanischen Schutz von Schlauchleitungen in Fahrzeugen, wie Kraftstoffschläuchen, Servolenkungsleitungen, Bremsschläuchen, Kühlwasserschläuchen oder Ladeluftschläuchen für Turbolader gestützte Motoren eingesetzt. Besonders Kühlwasserleitungen und Ladeluftschläuche unterliegen im Fahrbetrieb wechselseitigen Druckbelastungen von bis zu 3 bar und einer wechselweisen Erhöhung und/oder Verringerung des Schlauchdurchmessers von +/- 15% im Rahmen der im Betrieb der Leitungen auftretenden Pulsung, z. B. durch Auf- und Abbau des Ladedrucks. Hierbei hat sich gezeigt, dass der bei den bekannten Gewebeschläuchen eingesetzte Schussfaden das schwächste Glied des Gewebeschlauchs ist. Im Rahmen der Pulsung, d. h. des wechselseitigen Aufblasens und Abblasens von Luft oder flüssigen Medien, ist die Querstabilität und die Einbindung von Kette und Schuss im Gewebeschlauch schnell erschöpft. Dies führt dazu, dass beispielsweise der Schussfaden des Gewebeschlauchs nach einer gewissen Anzahl von Pulswechseln im Motorraum frei liegt, d. h. nicht mehr durch ihn ursprünglich umgebende Multifilament-Kettfäden geschützt wird und damit thermisch oder mechanisch verletzbar wird. Ergibt sich eine Friktionspaarung mit einem in der Umgebung des Gewebeschlauchs angeordneten anderen Gegenstand, dann ist ein totales Versagen des Gewebeschlauches nur eine Frage der Zeit.

Der in der oben erwähnten DE 103 53 777 A1 beschriebene Gewebeschlauch wird vor dem Einsatz auf die gewünschte Montagelänge gekürzt und beispielsweise mittels einer Schweiß-Schneide-Technik gemäß der deutschen Patentanmeldung 10 2006 030 583.3, auf die erforderliche Länge abgelängt.

Das im genannten Stand der Technik im Detail beschriebene Band sowie der beschriebene Gewebeschlauch und auch andere aus dem Stand der Technik bekannte Gewebeschläuche genügen oft nicht den betreffend gepulste Schlauchleitungen auferlegten Anforderungen. So ergibt sich ein Bedarf, gepulste Schlauchleitungen, d. h. Gummischlauchapplikationen, bestückt mit einem schrumpfenden Gewebeschlauch, zu verstärken und die Querstabilität, die mechanische Festigkeit und auch die Hitzebeständigkeit zu verbessern.

Es ist eine Aufgabe der vorliegenden Erfindung, ein Gewebe vorzuschlagen, mit dem die aus dem Stand der Technik bekannten Nachteile vermieden oder zumindest verringert werden. Daneben ist es Aufgabe der Erfindung, ein Verfahren zum Herstellen eines derartigen Gewebes vorzuschlagen.

Die Aufgabe wird zum einen gelöst mit einem Verfahren zum Herstellen eines Gewebes gemäß Anspruch 1.

In vorteilhafter Weise ergibt sich durch Verweben eines im selben Webfach wie ein monofiler oder monofilartiger Schussfaden laufenden multifilen Schussfadens eine schützende Einbettung des monofilen oder monofilartigen Schussfadens. Hierbei lässt sich durch einen vergleichsweise geringen Zusatzaufwand ein Gewebe erzeugen, dessen Querstabilität bei einer dynamischen mechanischen Belastung wesentlich verbessert ist und der aufgrund dieser Maßnahme im Endprodukt keine freiliegenden Monofil-Schussfäden befürchten lässt.

In einer vorteilhaften Ausbildung des erfindungsgemäßen Verfahrens wird wenigstens ein multifiler Schussfaden mit dem wenigstens einen monofilen oder monofilartigen Schussfaden gefacht eingearbeitet. Dies ist die allereinfachste Verfahrensweise, um zum angestrebten Ergebnis zu kommen, indem mit selben Fachwechsel der wenigstens eine gewünschte Monofil-Schussfaden parallel mit dem wenigstens einen multifilen Schussfaden verwebt wird.

Im Sinne der vorliegenden Anmeldung ist als monofilartiger Schussfaden ein Hybridgam oder ein Bi-Komponentengam gemeint.

Dadurch ergibt sich ein einfacheres Weben aufgrund der Tatsache, dass sowohl das Hybridgam wie das Bi-Komponentengam weniger steif sind, als ein in der Regel wesentlich dickeres Monofilgam und die Schussumkehrstellen weniger auftragen.

In einer weiteren vorteilhaften Ausbildung des erfindungsgemäßen Verfahrens wird als monofiler Faden ein Polyolefin-Monofil-Schussfaden verwebt. Diese Maßnahme hat sich als einfache und zuverlässige Herstellungsmethode bewiesen.

In einer weiteren vorteilhaften Ausbildung des erfindungsgemäßen Verfahrens wird das Gewebe als Teil eines radial schrumpfbaren zweilagig oder mehrlagig gewebten Gewebeschlauches hergestellt und stellt eine obere und/oder eine untere Gewebelage des gewebten Gewebeschlauches dar, bei dem die Gewebelagen an ihren Kanten mit Bindungsfäden miteinander verbunden werden, wobei der Gewebeschlauch wenigstens einen monofilen oder monofilartigen Schussfaden aus hochschrumpfbarem Material und Kettfäden aus schrumpfarmem Material aufweist, das dadurch gekennzeichnet ist, dass beim Webvorgang zu dem wenigstens einen monofilen oder monofilartigen Schussfaden wenigstens ein im selben Webfach laufender multifiler Schussfaden verwebt wird.

Ziel der Erfindung ist es, stets, die Verbesserung der Querstabilität bei der oben diskutierten Druckbelastung bzw. den Druckbelastungswechseln und einer verbesserten mechanischen Festigkeit des Schussfadens zu erreichen. Damit ist gegenüber aus dem Stand der Technik bekannten Lösungen das schwächste Glied, nämlich der oder die Schussfäden, von mechanischen und insbesondere thermischen Einflüssen wirkungsvoll dauerhaft und, wie eben beschrieben, mit vergleichsweise geringem Aufwand geschützt.

Die Aufgabe wird auch gelöst wird auch mit einem Gewebe, insbesondere hergestellt nach einem Verfahren gemäß einem der im Vorhergehenden diskutierten Ansprüche, welches dadurch gekennzeichnet ist, dass das Gewebe zu dem wenigstens einen monofilen oder monofilartigen Schussfaden wenigstens einen, im selben Webfach laufenden multifilen Schussfaden aufweist.

Die Ausgestaltung des eben beschriebenen erfindungsgemäßen Gewebes ermöglicht eine Einbettung des monofilen Schussfadens und damit einen Schutz vor mechanischen und insbesondere thermischen Einflüssen in wirkungsvoller und dauerhafter Weise. Die aus dem Stand der Technik beschriebenen Nachteile, insbesondere bei Einsatz des erfindungsgemäßen schrumpfbaren Gewebes bei Kühlwasserleitungen und Ladeluftschläuchen, welche hiermit ummantelt werden und im Betrieb einer pulsierenden wechselseitigen Druckbelastung unterliegen, werden durch Einsatz des erfindungsgemäßen Gewebes vermieden.

In einer vorteilhaften Ausbildung der Erfindung ist der wenigstens eine multifile Schussfaden mit dem wenigstens einen monofilen oder monofilartigen Schussfaden gefacht eingearbeitet, mit dem besonderen Vorteil, dass die Bindungskonstruktion hierfür keine besonderen Maßnahmen erfordert, da die beiden Schussfäden im selben Fach eingelegt werden.

In einer weiteren vorteilhaften Ausbildung der Erfindung ist der wenigstens eine monofile oder monofilartige Schussfaden mit wenigstens einem multifilen Schussfaden umsponnen, umflochten, umstrickt, umwirkt, verzwirnt oder in Kemafil-Technik ummantelt. Hiermit lässt sich in sehr einfacher Konstruktion ein erfindungsgemäßes schützendes Einbetten des Monofil-Schussfadens dadurch erreichen, dass er bereits, wie eben beschrieben, in eingebetteter Weise verwebt wird.

In einer anderen vorteilhaften Ausbildung der Erfindung weist das Gewebe zusätzlich einen oder mehrere geflochtene, umstrickte oder umwirkte Mikro-Schussfäden auf, um je nach Anforderung und Einsatzfall eine noch komfortablere Einbettung des monofilen oder monofilartigen Schussfadens zu erreichen.

Bei der vorliegenden Erfindung ist als monofilartiger Schussfaden ein Hybridgam oder ein Bi-Komponentengam eingesetzt. Dies hat den Vorteil, dass das Hybridgam oder Bi-Komponentengam als, vor einem thermischen Schrumpfvorgang, multifilartiges Material verwebt werden kann, mit dem Vorteil, dass die Gewebestruktur, insbesondere bei den Schussumkehrstellen weniger auftragend gestaltet werden kann.

In einer weiteren vorteilhaften Ausbildung des erfindungsgemäßen Gewebes hat sich insbesondere der Einsatz eines Polyolefin-Monofil-Schussfadens als monofiler Schussfaden bewährt.

In einer vorteilhaften Ausbildung der Erfindung wird ein zusätzlicher Schussfaden mit einem Titer im Bereich von 100 bis 400 dtex eingearbeitet.

In einer besonders bevorzugten Ausführung der Erfindung wird ein zusätzlicher Schussfaden mit einem Titer im Bereich von 150 bis 200 dtex eingesetzt. Beide genannten Ausführungen zeigen im Einsatz sehr gute Laufeigenschaften im Webprozess und lassen sich optimal weiterverarbeiten.

In einer besonders bevorzugten Ausführung der Erfindung wird das Gewebe in einem radial schrumpfbaren zweilagig gewebten Gewebeschlauch, insbesondere hergestellt nach einem Verfahren gemäß einem der im Vorhergehenden diskutierten Ansprüche integriert, als eine obere und/oder eine untere Gewebelage, bei dem die Gewebelagen an ihren Kanten mit Bindungsfäden miteinander verbunden sind, wobei der Gewebeschlauch wenigstens einen monofilen oder monofilartigen Schussfaden aus hochschrumpfbarem Material und Kettfäden aus schrumpfarmen Material aufweist, welcher dadurch gekennzeichnet ist, dass der Gewebeschlauch zu dem wenigstens einen monofilen oder monofilartigen Schussfaden wenigstens einen, im selben Webfach laufenden multifilen Schussfaden aufweist.

Ein derartig gestalteter Gewebeschlauch ist dafür vorgesehen, auf einen zu ummantelnden Gegenstand, dessen Durchmesser kleiner ist, als der Innendurchmesser des erfindungsgemäßen Schlauchs, aufgeschoben zu werden und danach unter Zufuhr von Wärme geschrumpft zu werden. Hierbei ergeben sich beim Hybridgarn wie beim Bikomponentengarn monofilartige Schussfadenstrukturen, welche sich gleichzeitig erfindungsgemäß durch die Eigenschaft der hohen Schrumpfbarkeit sehr eng um den ummantelten Gegenstand legen und während des Schrumpfungsprozesses straff anlegen, mit dem weiteren Vorteil, dass dadurch beim Stand der Technik beklagte Faltenwürfe und Aufstauchungen des Gewebeschlauches, insbesondere im Bereich von Innenradien ummantelter Schläuche oder Rohre, vermieden werden können.

Die oben diskutierte Erfindung ermöglicht es, ein in der Praxis ständig beklagtes Problem, nämlich die bei Impulsbelastung des Gewebeschlauches häufig zu geringer Querstabilität zu lösen und diese entsprechend zu verbessern. Auch ist es mit der erfindungsgemäßen Konstruktion möglich, die Verschiebefestigkeit zwischen Kettfaden und Schussfaden wesentlich zu verbessern. Das erfindungsgemäße Gewebe sowie der erfindungsgemäße Gewebeschlauch weisen eine wesentlich höhere Zuverlässigkeit bei aufgeschrumpften Schlauchapplikationen auf, als dies aus dem Stand der Technik bekannt ist. Mit durch das erfindungsgemäße Verfahren erzeugten Geweben und Gewebeschläuchen lassen sich Gummischlauchapplikationssituationen, welche mit dem erfindungsgemäßen Gewebe oder Gewebeschlauch bestückt sind, verstärken und hierbei die Querstabilität, die mechanische Festigkeit und die Hitzebeständigkeit erheblich verbessern. Insbesondere bei Einsatz eines gemäß den Ansprüchen "verstärkten Schussfadenverbunds" lässt sich über die gesamte eingesetzte Schlauchlänge die Querstabilität bei wechselseitiger zu- und abnehmender Druckbelastung erheblich verbessern. Dabei werden aus dem Stand der Technik bekannte einschlägige Textilausrüstungsverfahren, die eine Verbesserung der Situation erreichen wollen, wie beispielsweise das Foulardieren von bekannten Versiegelungsmitteln auf die Textiloberfläche ausscheiden, da sie den geforderten Ansprüchen nicht genügen. Auch eine im Stand der Technik zur Lösung des Problems vorgeschlagene erhöhte Konzentration sowie eine höhere Beschichtungsintensität ist keine Lösung, da diese eine stark abnehmende Flexibilität des Schlauchproduktes und auch eine drastische Reduzierung der Schrumpffähigkeit mit sich bringen.

Die Erfindung wird nun unter Zuhilfenahme der Zeichnung anhand eines Beispiels kurz erläutert.
- Fig. 1: zeigt in schematischer Darstellung im Querschnitt ein erfindungsgemäßes Gewebe, hier als obere und untere Gewebelage integriert in einen Gewebeschlauch.
- Fig. 2: zeigt schematisch in auseinandergezogener Darstellung die Anordnung von oberer Gewebelage und unterer Gewebelage eines erfindungsgemäßen Gewebes und Gewebeschlauchs sowie die Anbindung der Gewebelagen.
- Fig. 3 bis 4: zeigen Beispiele schematisch stark vergrößerter Darstellungen der im erfindungsgemäßen Gewebe eingesetzten Schussfäden.

Im Folgenden wird vom "erfindungsgemäßen Gewebe" gesprochen. Mit diesem Begriff sollen auch Gewebebänder eingeschlossen werden, wobei Bänder in herkömmlicher Denkweise eine größere Längs- als Querdimension haben.

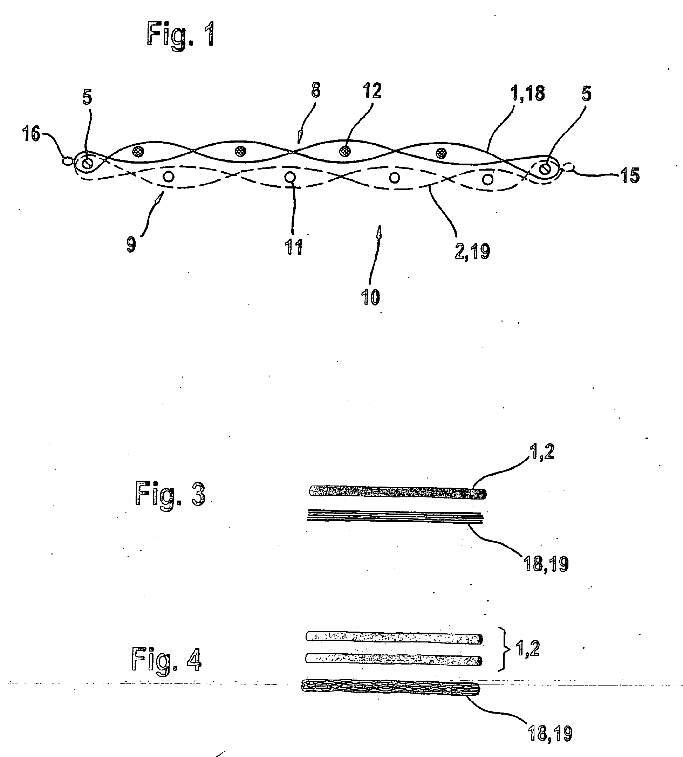

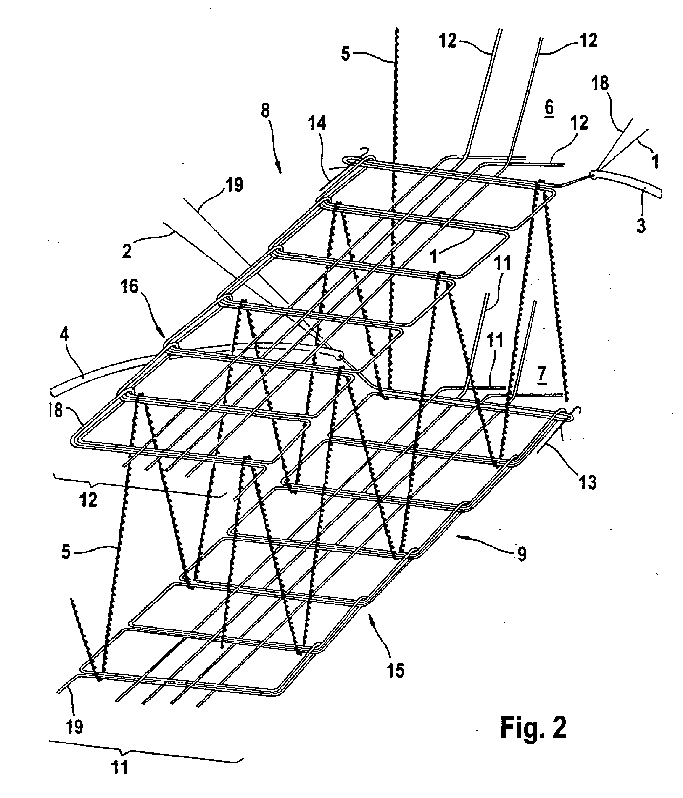

Fig. 1 zeigt ein erfindungsgemäßes Gewebe, hier als obere 8 und untere 9 Gewebelage integriert in einen Gewebeschlauch 10, geschnitten quer zur Längsrichtung des Gewebeschlauchs mit einer oberen Gewebelage 8 und einer unteren Gewebelage 9 sowie entsprechenden oberen Kettfäden 12 und unteren Kettfäden 11. Die Zahl der Kettfäden ist in einem derartigen Gewebeschlauch tatsächlich wesentlich höher. Zur Vereinfachung der Darstellung wurden hier jeweils symbolisch nur je vier Kettfäden dargestellt. Die obere Gewebelage 8 wird auch aus einem monofilen Schussfaden 1 und einem multifilen Schussfaden 18 gebildet, die untere Gewebelage 9 wird auch aus einem monofilen Schussfaden 2 und einem multifilen Schussfaden 19 gebildet. Die Schussfäden 1, 18 und 2, 19 werden mittels in Fig. 2 abgebrochen dargestellten Schussnadeln 3 und 4 in das Band eingewebt, und zwar derart, dass die unteren Schussfäden 2, 19 mittels einer Wirknadel 13 in sich selbst vermascht werden, siehe Bezugszeichen 15 und die oberen Schussfäden 1, 18 mittels einer Wirknadel 14 in sich selbst vermascht werden, siehe Bezugszeichen 16. Diese Maschenbindungen sind symbolisch auch in Fig. 1 dargestellt. Die obere Gewebelage 8 und die untere Gewebelage 9 sind über Kantenfäden 5 miteinander verbunden, so dass sich im Ergebnis ein gewebter Schlauch 10 ergibt. Die monofilen oder monofilartigen Schussfäden 1 und 2 des erfindungsgemäßen Gewebeschlauchs 10 bestehen aus hochschrumpfbarem Material. Hierzu eignet sich insbesondere ein thermoplastischer Werkstoff, wie zum Beispiel Polyolefinen (Polyester, LDPE, HDPE, LLDPE, Elastomere, Polyurethane etc.) oder ein über die Verreckungsintensität modifiziertes Polyamid, wogegen für die unteren und oberen Kettfäden 11 und 12 vorzugsweise Polyester-Material eingesetzt wird. Die multifilen Schussfäden 18 und 19 des erfindungsgemäßen Gewebeschlauchs 10 bestehen aus hochschrumpfbarem Material.

Um den hier dargestellten erfindungsgemäßen Gewebeschlauch auf einen zu ummantelnden Gegenstand aufzuschrumpfen, wird er auf den Gegenstand aufgeschoben und dann beispielsweise mit Heißluft oder im Rahmen der Weiterbehandlung in einem Vulkanisationsprozess unter Dampf und/oder Druckbeaufschlagung oder einem anderen geeigneten Verfahren erwärmt. Die thermoplastischen monofilen oder monofilartigen Schussfäden 1 und 2 schrumpfen infolge der Erwärmung. Der Gewebeschlauch legt sich dabei so eng wie möglich an den zu ummantelnden Gegenstand. Die multifilen Schussfäden oder Schussfadenbestandteile 18, 19 schrumpfen nicht in gleichem Maße wie die monofilen Schussfäden und werden dagegen etwas gestaucht. Die gestauchten Schussfäden 18, 19 bilden dabei eine hervorragende Einbettung für die monofilen Schussfäden 1 bzw. 2.

In Fig. 3 wird stark schematisiert und vereinfacht eine extreme Vergrößerung der Schussfäden des erfindungsgemäßen Gewebeschlauchs 10 dargestellt. Man ererkennt den vergleichsweise dicken monofilen oder monofilartigen Schussfaden 1 bzw. 2 und den dazu gefacht parallel verlaufenden Multifil-Faden 18 bzw. 19.

Fig. 4 zeigt eine der Darstellung nach Fig. 3 ähnliche Darstellung, wobei hier beispielhaft zwei Monofilfäden der oberen Gewebelage gefacht vorliegen, denen parallel gefacht ein Multifilfaden 18 der beispielsweise gegenüber der Darstellung nach Fig. 3 hier gedreht oder getangelt dargestellt ist.

Wenn in der vorliegenden Beschreibung von monofilen oder monofilartigen Schussfäden gesprochen wird, so steht der Begriff "monofilartig" für Fäden aus Bikomponenten- oder Hybridgarnen, welche unterschiedliche Komponenten aufweisen, die unterschiedliche Schmelzpunkte haben. So können beispielsweise Hybridgarne, welche hochschmelzende und niedriger schmelzende Fadenbestandteile haben, wie ein Multifil verwebt werden. Bei thermischer Beaufschlagung mit einer Temperatur unterhalb der hochschmelzenden Gamkomponenten schmelzen die Garnbestandteile mit niedrigem Schmelzpunkt und verfestigen das Garn dabei in einer Form, die einer monofilartigen Struktur ähnelt. Derartige Fäden sollen an dieser Stelle jedoch nicht weiter beschrieben werden, da sie aus dem Stand der Technik bekannt sind.

Weitere Ausführungsbeispiele ergeben sich durch Verstärkung des wenigstens einen Schussfadens oder von mehreren parallel oder gefacht eingesetzten Schussfäden durch zusätzliches Einbringen gemäß den Ansprüchen von zahlreichen Fadenmaterialien. Hierfür seien beispielhaft genannt ein zusätzliches Eintragen eines oder mehrerer Schussfäden oder die Anwendung von mehrlagig extrudierten Fadentypen bzw. Fasertypen wie Bi-Komponentengamen und dergleichen.

Ein weiterer Vorteil wurde bei dem erfindungsgemäßen Gewebeschlauch beobachtet, nämlich dass sich eine festere Einbindung der Monofil-Schussfäden in Umkleidung oder Ummantelung von Multifil-Schussfäden erreichen lässt, bei gleichzeitiger Beibehaltung der flexiblen Eigenschaften des Gewebeschlauchs. Die hierbei daneben erreichte verbesserte Fixierung des Schussfadens bzw. der Schussfäden verhindert auch ein leichtes Verlorengehen des Schussfadens oder Teile hiervon nach erfolgtem Kaltschnitt (Konfektionierung auf die gewünschte Abschnittslänge, passend für die Applikation). Auf einen ganz besonderen Vorteil des erfindungsgemäßen Gewebeschlauchs in diesem Zusammenhang sei noch einmal hingewiesen, nämlich dass dadurch die größte Gefahr, welche sich beim Einsatz von Gewebeschläuchen im Motorraum von Fahrzeugen ergibt, nämlich das mögliche Herausfallen von Fadenstücken bzw. das Auftrennen des Gewebes im Schnittkantenbereich vermieden wird und damit auch die erhebliche Beeinträchtigung der Gebrauchsfähigkeit bzw. Einsatzfähigkeit des eigentlich als Schutzprodukt wirkenden Gewebeschlauchs gewährleistet wird.

## Patentansprüche

1. Verfahren zum Herstellen eines Gewebes (8, 9), wobei das Gewebe (8, 9) wenigstens einen monofilen oder monofilartigen Schussfaden aus hochschrumpfbarem Material und Kettfäden aus schrumpfarmem Material aufweist,
wobei beim Webvorgang zu dem wenigstens einen monofilen oder monofilartigen Schussfaden (1, 2) wenigstens ein im selben Webfach laufender multifiler Schussfaden (18, 19) verwebt wird,
wobei monofilartige Schussfäden Fäden aus Bikomponenten- oder Hybridgarnen sind, welche unterschiedliche Komponenten aufweisen, die unterschiedliche Schmelzpunkte haben und wie ein Multifil verwebt werden können und bei thermischer Beaufschlagung mit einer Temperatur unterhalb der hochschmelzenden Gamkomponenten deren Gambestandteile mit niedrigem Schmelzpunkt schmelzen und das Garn dabei in einer Form, die einer monofilartigen
Struktur ähnelt, verfestigen,
wobei der wenigstens eine multifile Schussfaden (18, 19) geeignet ist, nicht in gleichem Maße wie die monofilen oder monofilartigen Schussfäden zu schrumpfen und den monofilen oder monofilartigen Schussfaden einzubetten.

2. Verfahren nach Anspruch 1, **dadurch gekennzeichnet, dass** der wenigstens eine multifile Schussfaden (18, 19) mit dem wenigstens einen monofilen oder monofilartigen Schussfaden (1, 2) gefacht eingearbeitet wird.

3. Verfahren nach einem der Ansprüche 1 oder 2, **dadurch gekennzeichnet, dass** als monofiler Schussfaden ein Polyolefin-Monofil-Schussfaden eingesetzt wird.

4. Verfahren nach einem der Ansprüche 1 bis 3, wobei das Gewebe Teil eines radial schrumpfbaren zweilagig oder mehrlagig gewebten Gewebeschlauches ist und eine obere oder eine untere Gewebelage gewebten Gewebeschlauches darstellt, bei dem die Gewebelagen an ihren Kanten mit Bindungsfäden miteinander verbunden werden, wobei der Gewebeschlauch wenigstens einen monofilen oder monofilartigen Schussfaden aus hochschrumpfbarem Material und Kettfäden aus schrumpfarmem Material aufweist, **dadurch gekennzeichnet, dass** beim Webvorgang zu dem wenigstens einen monofilen oder monofilartigen Schussfaden (1, 2) wenigstens ein im selben Webfach laufender multifiler Schussfaden (18, 19) verwebt wird.

5. Gewebe (8, 9), insbesondere hergestellt nach einem Verfahren gemäß einem der vorgehenden Ansprüche,
wobei das Gewebe (8, 9) zu dem wenigstens einen monofilen oder monofilartigen Schussfaden (1, 2) wenigstens einen im selben Webfach laufenden multifilen Schussfaden (18, 19) aufweist,
wobei monofilartige Schussfäden Fäden aus Bikomponenten- oder Hybridgarnen sind, welche unterschiedliche Komponenten aufweisen, die unterschiedliche Schmelzpunkte haben und wie ein Multifil verwebt werden können und bei thermischer Beaufschlagung mit einer Temperatur unterhalb der hochschmelzenden Garnkomponenten deren Gambestandteile mit niedrigem Schmelzpunkt schmelzen und das Garn dabei in einer Form, die einer monofilartigen Struktur ähnelt, verfestigen,
wobei der wenigstens eine multifile Schussfaden (18, 19) geeignet ist, nicht in gleichem Maße wie die monofilen oder monofilartigen Schussfäden zu schrumpfen und den monofilen oder monofilartigen Schussfaden einzubetten.

6. Gewebe nach Anspruch 5, **dadurch gekennzeichnet, dass** der wenigstens eine multifile Schussfaden (18, 19) mit dem wenigstens einen monofilen oder monofilartigen Schussfaden (1, 2) gefacht eingearbeitet ist.

7. Gewebe nach einem der Ansprüche 5 oder 6, **dadurch gekennzeichnet, dass** der monofiler Schussfaden ein Polyolefin-Monofil-Schussfaden ist

8. Gewebe nach einem der Ansprüche 5 bis 7, **dadurch gekennzeichnet, dass** der oder die multifilen Schussfaden / Schussfäden einen Titer im Bereich von dtex 100 bis 400 haben.

9. Gewebe nach einem der Ansprüche 5 bis 8, **dadurch gekennzeichnet, dass** der oder die multifilen Schussfaden / Schussfäden einen Titer im Bereich von dtex 150 bis 200 haben.

10. Radial schrumpfbarer zweilagig gewebter Gewebeschlauch (10), wobei das Gewebe (8, 9) nach einem der Ansprüche 5 bis 9, insbesondere hergestellt nach einem Verfahren gemäß einem der Ansprüche 1 bis 7, Teil des Gewebeschlauchs (10) ist, und wobei das Gewebe eine obere (8) und/oder eine untere (9) Gewebelage eines gewebten Gewebeschlauches (10) darstellt, bei dem die Gewebelagen (8, 9) an ihren Kanten mit Bindungsfäden (5) miteinander verbunden sind, wobei der Gewebeschlauch (10) wenigstens einen monofilen oder monofilartigen Schussfaden (1, 2) aus hochschrumpfbarem Material und Kettfäden aus schrumpfarmem Material aufweist, **dadurch gekennzeichnet, dass** das Gewebe (10) zu dem wenigstens einen monofilen oder monofilartigen Schussfaden (1, 2) wenigstens einen im selben Webfach laufenden multifilen Schussfaden (18, 19) aufweist.

## Claims

1. A method for producing a woven fabric (8, 9) comprising at least one monofil or monofil-type weft thread of high-shrink material and warp threads made of low-shrink material,
wherein at least one multifil weft thread (18, 19) running in the same shed is interwoven with the at least one monofil or monofil-type weft thread (1, 2) during the weaving process,
wherein the monofil-type weft threads being bi-component or hybrid yarns differingly componented and having different melting points and being adapted to be woven the same way as a multifil and when subjected to a temperature below the yarn component having a high melting point the components of the yarn having a low melting point melt and harden the structure of the yarn similar to that of a monofil,
the at least one multifil weft thread (18, 19) being adapted to shrink not to the same extent as the monofil weft threads and to make for an embedding for the monofil or monofil-type weft threads.

2. The method as set forth in claim 1, **characterized in that** the at least one multifil weft thread (18, 19) is shedded with the at least one monofil or monofil-type weft thread (1, 2).

3. The method as set forth in any of the claims 1 or 2, **characterized in that** a polyolefine monofil weft thread is interwoven as the monofil weft thread.

4. The method as set forth in any of the claims 1 or 3, **characterized in that** the woven fabric is produced as part of a radially shrinkable two or more ply tubular woven fabric, i.e. as a upper and/or lower ply thereof in which the plies are interlaced at their edges, the tubular woven fabric comprising at least one monofil or monofil-type weft thread of high-shrink material and warp threads of low-shrink material, **characterized in that** at least one multifil weft thread (18, 19) running in the same shed is interwoven with the at least one monofil or monofil-type weft thread (1, 2) during the weaving process.

5. A woven fabric, produced in particular by a method as set forth in any of the preceding claims, wherein the woven fabric (8, 9) comprises, in addition to the least one monofil or monofil-type weft thread (1, 2), at least one multifil weft thread (18, 19) running in the same shed,
wherein the monofil-type weft threads being bi-component or hybrid yarns differingly componented and having different melting points and being adapted to be woven the same way as a multifil and when subjected to a temperature below the yarn component having a high melting point the components of the yarn having a low melting point melt and harden the structure of the yarn similar to that of a monofil,
the at least one multifil weft thread (18, 19) being adapted to shrink not to the same extent as the monofil weft threads and to make for an embedding for the monofil or monofil-type weft threads.

6. The woven fabric as set forth in claim 5, **characterized in that** at least one multifil weft thread (18, 19) is shedded with at least one monofil or monofil-type weft thread (1, 2).

7. The woven fabric as set forth in any of the claims 5 to 6, **characterized in that** the monofil weft thread is a polyolefine monofil weft thread.

8. The woven fabric as set forth in any of the claims 5 to 7, **characterized in that** an additional weft thread is incorporated with a dtex in the range 100 to 400 dtex.

9. The woven fabric as set forth in any of the claims 5 to 8, **characterized in that** an additional weft thread having a dtex in the range 150 to 200 dtex is incorporated.

10. A radially shrinkable two-ply tubular woven fabric (10), the woven fabric (8, 9) of which is produced as set forth in any of the claims 5 to 9, particularly in accordance with a method as set forth in any of the claims 1 to 7 as part of the tubular woven fabric (10), as an upper (8) and/or lower (9) ply thereof in which the plies (8, 9) are interlaced at their edges with interlacing threads (5), the tubular woven fabric (10) comprising at least one monofil or monofil-type weft thread (1, 2) of high-shrink material and warp threads of low-shrink material, **characterized in that** the woven fabric (10) comprises, in addition to the at least one monofil or monofil-type weft thread (1, 2), at least one multifil weft thread (18, 19) running in the same shed.

## Revendications

1. Procédé de fabrication d'un tissu (8, 9), le tissu (8, 9) présentant au moins un fil de trame monofil ou semblable à un monofil en matière hautement rétractable et des fils de chaîne en matière peu rétractable,
procédé dans lequel dans l'opération de tissage est tissé en plus du fil de trame monofil ou semblable à un monofil (1, 2), au moins au nombre de un, au moins un fil de trame multifil (18, 19) s'étendant dans le même pas de chaîne, les fils de trame semblables à des monofils étant des fils composés de filés bi-composants ou hybrides, présentant des composants différents ayant des points de fusion différents et pouvant être tissés comme un multifil et qui sous un apport thermique à une température inférieure aux composants de fil à point de fusion élevé, fondent les éléments de leurs filés présentant un point de fusion plus bas consolidant le filé dans une forme qui ressemble à une structure du genre monofil,
le fil de trame multifil (18, 19), au moins au nombre de un, étant apte à ne pas se rétracter dans la même mesure que les fils de trame monofils ou semblables à un monofil et à incorporer le fil de trame monofil ou semblable à un monofil.

2. Procédé selon la revendication 1, **caractérisé en ce que** le fil de trame multifil (18, 19), au moins au nombre de un, est intégré en assemblant le fil de trame monofil ou semblable à un monofil (1, 2), au moins au nombre de un.

3. Procédé selon l'une quelconque des revendications 1 ou 2, **caractérisé en ce qu'**un fil de trame monofil polyoléfine est utilisé comme fil de trame monofil.

4. Procédé selon l'une quelconque des revendications 1 à 3, le tissu étant une partie d'une gaine textile radialement rétractable, tissée en deux ou plusieurs couches et représentant une gaine textile tissée en une couche textile supérieure ou inférieure, dans laquelle les couches textiles sont reliées entre elles en leurs lisières à l'aide de fils de liaison, la gaine textile présentant au moins un fil de trame monofil ou semblable à un monofil en matière hautement rétractable et des fils de chaîne en matière peu rétractable, **caractérisé en ce que** dans l'opération de tissage, en plus du fil de trame monofil ou semblable à un monofil (1, 2), au moins au nombre de un, est tissé un fil de trame multifil (18, 19), au moins au nombre de un, s'étendant dans le même pas de chaîne.

5. Tissu (8, 9), surtout fabriqué d'après un procédé selon l'une des revendications précédentes,
procédé dans lequel le tissu (8, 9) présente en plus du fil de trame monofil ou semblable à un monofil (1, 2), au moins au nombre de un, au moins un fil de trame multifil (18, 19) s'étendant dans le même pas de chaîne,
les fils de trame semblables à des monofils étant des fils composés de filés bi-composants ou hybrides, présentant des composants différents ayant des points de fusion différents et pouvant être tissés comme un multifil et qui sous un apport thermique à une température inférieure aux composants de fil à point de fusion élevé, fondent les éléments de leurs filés présentant un point de fusion plus bas consolidant le filé dans une forme qui ressemble à une structure du genre monofil,
le fil de trame multifil (18, 19), au moins au nombre de un, étant apte à ne pas se rétracter dans la même mesure que les fils de trame monofils ou semblables à un monofil et à incorporer le fil de trame monofil ou semblable à un monofil.

6. Tissu selon la revendication 5, **caractérisé en ce que** le fil de trame multifil (18, 19), au moins au nombre de un, est intégré en assemblant le fil de trame monofil ou semblable à un monofil (1, 2), au moins au nombre de un.

7. Tissu selon l'une quelconque des revendications 5 ou 6, **caractérisé en ce que** le fil de trame monofil est un fil de trame monofil polyoléfine.

8. Tissu selon l'une quelconque des revendications 5 à 7, **caractérisé en ce que** le ou les fils de trame multifil présentent un titre dans la plage de 100 à 400 dtex.

9. Tissu selon l'une quelconque des revendications 5 à 8, **caractérisé en ce que** le ou les fils de trame multifil présentent un titre dans la plage de 150 à 200 dtex.

10. Gaine textile (10) radialement rétractable, tissée en deux couches, dans lequel le tissu (8, 9) selon l'une quelconque des revendications 5 à 9, notamment fabriqué d'après le procédé selon l'une quelconque des revendications 1 à 7, fait partie de la gaine textile (10), et le tissu présente une couche textile supérieure (8) et/ou inférieure (9) d'une gaine textile tissée (10), et dans laquelle les couches textiles (8, 9) sont reliées entre elles le long de leurs lisières à l'aide de fils de liaison (5), la gaine textile (10) présentant au moins un fil de trame monofil ou semblable à un monofil (1, 2) en matière hautement rétractable et des fils de chaîne en matière peu rétractable, **caractérisée en ce que** le tissu (10) présente en plus du fil de trame monofil ou semblable à un monofil (1,2), au moins au nombre de un, au moins un fil de trame multifil (18, 19) s'étendant dans le même pas de chaîne.
